# EUROPÄISCHE PATENTSCHRIFT

(11) **EP 1 234 699 B1**
(45) Veröffentlichungstag und Bekanntmachung des Hinweises auf die Patenterteilung: **26.04.2006**
(21) Anmeldenummer: 02001733.1
(22) Anmeldetag: 25.01.2002
(51) Int. Cl.: B60J 1/18, B60J 7/12, B60J 10/12

(54) **Herstellung eines Cabriolet-Verdecks**
Manufacturing method for cabrio top
Procédé de fabrication d'une capote pour véhicule cabriolet

(30) Priorität: 27.02.2001 DE 10109414
(43) Veröffentlichungstag der Anmeldung: 28.08.2002
(73) Patentinhaber: Wilhelm Karmann GmbH, 49084 Osnabrück (DE)
(72) Erfinder: Verwold, Andreas, 49205 Hasbergen (DE)
(74) Vertreter: Ouzman, Beverley Nicola Claire

(56) Entgegenhaltungen:
- EP-A- 0 878 337
- DE-A- 19 860 555
- DE-C- 19 914 801

## Beschreibung

Die Erfindung betrifft eine Vorrichtung zur Herstellung eines Cabriolet-Verdecks nach dem Oberbegriff des Anspruchs 1.

Aus der gattungsgemäßen DE 298 17 980.6 ist die Befestigung eines Rahmenbereichs eines Verdecks an einer von diesem umfaßten Heckscheibe offenbart, wobei die Heckscheibe selbst keinen Rahmen ausbildet und mittels einer zwischengelegten Schweißfolie direkt mit dem Rahmenbereich des Verdecks verbunden wird. Zielsetzung einer derartigen Verbindung ist ein möglichst flacher Rahmenbereich, der ohne wulstartige Ausformungen die Heckscheibe oder eine andere innerhalb des Verdecks gehaltene Scheibe einfaßt, um damit optisch unauffällig zu wirken und eine möglichst gute Sicht ohne Beschränkungen durch vorstehende Rahmen zu gewährleisten.

Die EP O 878 337 A1 zeigt eine Fixierung einer Heckscheibe an einer Schmelzform mittels eines diese positionierenden Schwenkarms. Der Schwenkarm wirkt jedoch nur einseitig und muß am Verdeckstoff vorbeigreifen, um nicht mit diesem zu kollidieren. Eine optimale Auflage des Verdeckstoffs ist daher erschwert. Das Verdeck ist weiterhin durch einen eine Öffnung durchgreifenden Pin ausgerichtet. Verdeck und Scheibe werden durch Verschmelzen einer einzubringenden Kunstharzmasse, die wulstartige Erhebungen am Scheibenrand bildet, miteinander verbunden, so daß diese eventuelle Inkorrektheiten bei der Positionierung der Teile zueinander ausgleichen kann, jedoch selbst aufgrund ihrer Dicke die Sicht nach hinten behindert.

Der Erfindung liegt das Problem zugrunde, eine maschinelle Herstellung von Verdecken zu ermöglichen, die eine direkt von einem Rahmenbereich umfaßte und ansonsten rahmenlose Scheibe, insbesondere Heckscheibe, umfassen.

Die Erfindung löst dieses Problem durch eine Vorrichtung mit den Merkmalen des Anspruchs 1. Hinsichtlich vorteilhafter Ausgestaltungen wird auf die Ansprüche 2 bis 6 verwiesen.

Durch die erfindungsgemäße Vorrichtung kann eine paßgenaue Verbindung der Scheibe mit dem umgebenden Rahmenbereich erfolgen. Dabei kann der Rahmenbereich als Teil eines beispielsweise flexiblen Verdeckbezugs ausgebildet und in der Vorrichtung fest und ausgerichtet halterbar sein, wobei in dieser Stellung die Heckscheibe zugeführt und über die Fixierungseinrichtung derart ausgerichtet ist, daß lediglich ein sehr schmaler Überlappungsbereich zu der Heckscheibe entsteht. Dadurch kann das Sichtfeld fast über die gesamte Größe der Scheibe erhalten bleiben.

Weil die Fixierungseinrichtung Schubglieder umfaßt, die über die Scheibenkanten auf die Scheibe einwirken, muß die Scheibe nicht von Haltegliedern übergriffen werden. Ein im Randbereich der Scheibe aufgetragener (eventuell reaktiver) Klebstoff bleibt daher von der Fixierungseinrichtung unberührt. Die Schubglieder sind bevorzugt umlaufend um die Scheibe verteilt, um einen Schub aus jeder Richtung bewirken zu können und somit die Scheibe aus einer beliebigen Fehlstellung in die paßgenaue Endstellung überführen zu können. Besonders günstig sind dabei die Halteglieder miteinander gekoppelt und in dieser gekoppelten Stellung gleichzeitig verfahrbar. Die Kopplung kann nach Art eines umlaufenden Bandes einer Schraubzwinge ausgebildet sein, wodurch auf alle Schubglieder in der gleichen Weise eingewirkt wird. Somit entsteht zwangsläufig durch Zugausübung auf das umlaufende Band stets die gleiche Endstellung der Scheibe, ohne daß ein gesondertes Steuerprogramm hierfür erforderlich wäre.

Eine besonders vorteilhafte Ausgestaltung ergibt sich, wenn die Schubglieder an einer zu öffnenden Baugruppe gehalten sind, die in Öffnungsstellung das Einlegen der Scheibe nicht behindert. Beispielsweise können hierfür zwei schwenkbare Tragrahmen ausgebildet sein, die in Schließstellung miteinander koppelbar sind und hierbei den den Rahmenbereich des Verdecks umfassenden Teil übergreifen.

Bei Ausbildung einer den Rahmenbereich untergreifenden Elektrode mit einer Abstufung kann einer Umbugvernähung oder -verklebung des Rahmenbereichs Rechnung getragen werden. Der dabei umgeschlagene Bereich muß sich nicht über die ganze Breite der Elektrode erstrecken, sondern kann lediglich wenige Millimeter bis zu wenigen Zentimetern breit sein und dennoch in der Elektrode eine Unterstützungsfläche mit gleichmäßigem Wärmeeintrag erfahren.

Besonders vorteilhaft ist die Scheibe innenseitig an ihrem Rand von einem Abdeckstreifen übergriffen, um dadurch auch optisch von der Innenseite einen angenehmen Abschluß zu erreichen und über die doppelte Halterung des Scheibenrandes von beiden Seiten eine mechanisch stabile Verbindung auszubilden. Um eine solche Verbindung zu ermöglichen, sind in der Vorrichtung zwei Arbeitsschritte vorgesehen, wobei zunächst im ersten Arbeitsschritt der den Rahmenbereich umfassende Teil des Verdecks mit der Scheibe verbunden wird und im zweiten Schritt der Abdeckstreifen mit dem äußeren Verdeckteil verschweißt wird.

Weitere Vorteile und Einzelheiten ergeben sich aus einem in der Zeichnung dargestellten Ausführungsbeispiel des Gegenstandes der Erfindung. In der Zeichnung zeigt:
- Fig. 1: die erfindungsgemäße Vorrichtung bei geöffneter Baugruppe und nach Einlegung des den Rahmenbereich umfassenden Teils des Verdecks in perspektivischer Ansicht,
- Fig. 2: die Vorrichtung nach Fig. 1 nach Zuführung und Fixierung der Scheibe,
- Fig. 3: eine Draufsicht auf die Vorrichtung in Stellung nach Fig. 2 mit gestrichelt eingezeichneten Antriebsgliedern für die Bewegung der Schubglieder,
- Fig. 4: einen Schnitt entlang der Linie IV-IV in Fig. 3,

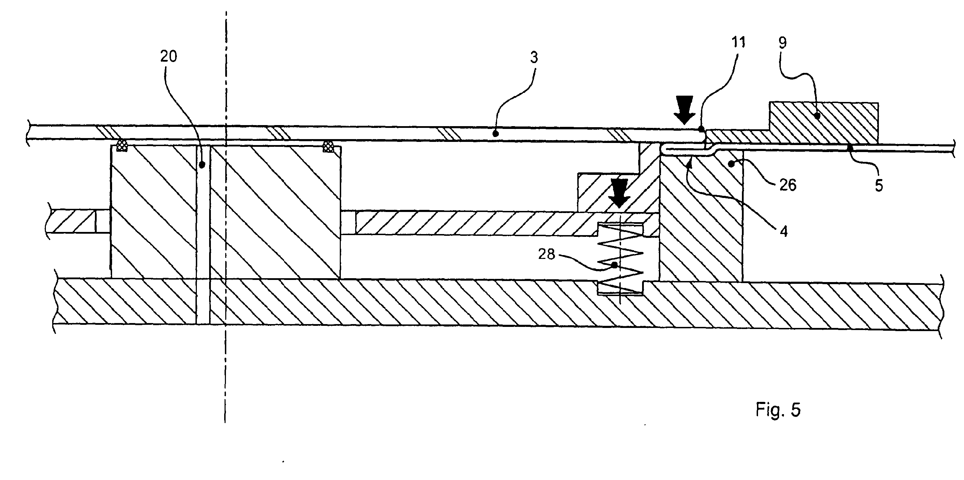

- Fig. 5: eine ähnliche Ansicht wie Fig. 4 nach Unterdruckfestlegung,
- Fig. 6: eine ähnliche Ansicht wie Fig. 5 während des Verschweißens bzw. Verklebens des Rahmenteils sowie des Abdeckstreifens mit der Scheibe,
- Fig. 7: eine ähnliche Ansicht wie Fig. 6 während des Verschweißens bzw. Verklebens des Abdeckstreifens mit dem Teil des Verdecks, der den Rahmenbereich für die Heckscheibe umfaßt,
- Fig. 8: ein Cabriolet-Fahrzeug mit einem nach dem erfindungsgemäßen Verfahren hergestellten Verdeck in perspektivischer Ansicht.

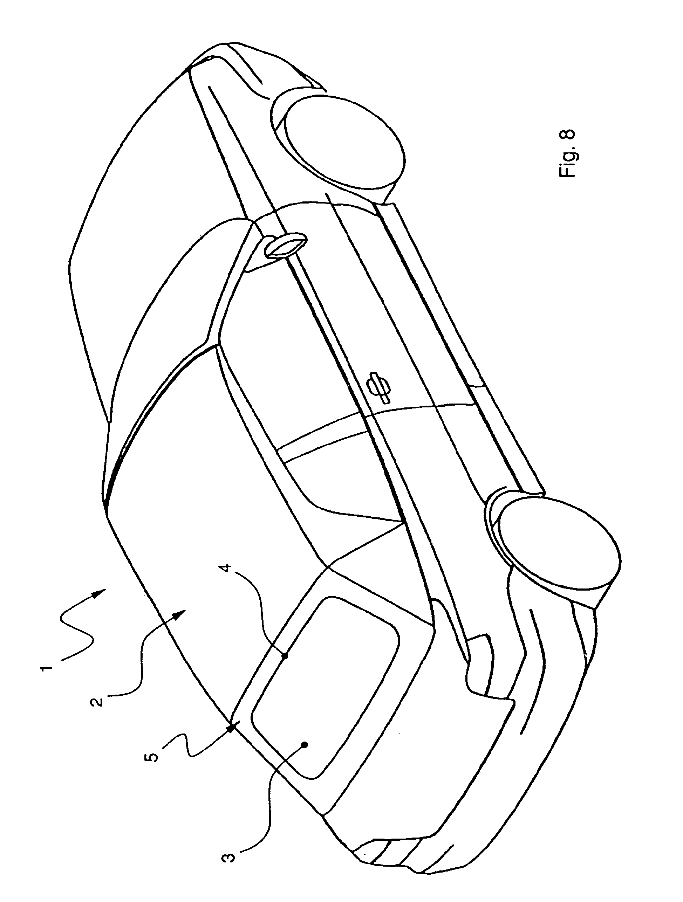

Das in Fig. 8 dargestellte Cabriolet-Fahrzeug 1 weist ein Verdeck 2 auf, das mit einer Heckscheibe 3 versehen ist, die von einem Rahmenbereich 4 eingefaßt ist.

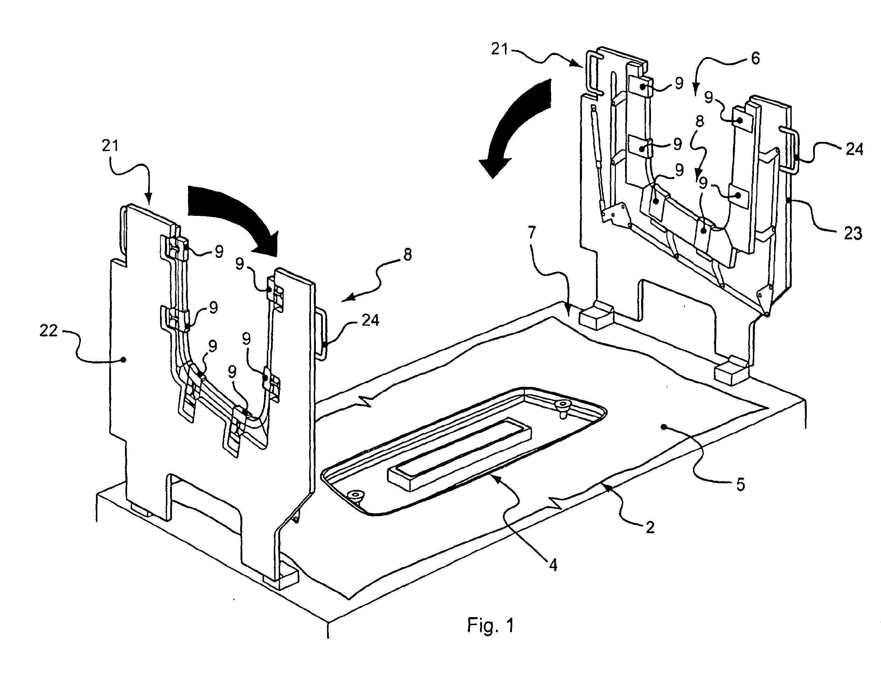

Um diese Verbindung zwischen dem den Rahmenbereich 4 umfassenden Teil 5 des Verdecks 2 zu ermöglichen, ist die Vorrichtung 6 gemäß Fig. 1 vorgesehen.

Die Vorrichtung 6 umfaßt eine Auflage 7 für den den Rahmenbereich 4 umfassenden Teil 5 des Verdecks 2. Der Rahmenbereich 4 kann dabei zum vollständigen oder teilweisen Umgreifen einer Scheibe 3 vorgesehen sein. Die Auflage 7 kann so ausgebildet sein, daß der Teil 5 vollständig hierauf halterbar ist, was bei einem flexiblen Teil 5 beispielsweise auch mittels Einfalten von Bereichen des Teils 5 möglich ist.

Die Vorrichtung 6 umfaßt weiterhin eine insgesamt mit 8 bezeichnete Fixierungseinrichtung zur paßgenauen Ausrichtung und Halterung der Scheibe 3 in der Vorrichtung 6. Die Fixierungseinrichtung 8 umfaßt einzelne Glieder 9, die auf die Scheibe 3 einwirken und diese dabei in Bearbeitungsstellung fixieren und halten können. Die Glieder 9 sind im Ausführungsbeispiel als Schubglieder ausgebildet, was nicht zwingend ist.

Die Schubglieder 9 sind jeweils in Kulissen 10 aufgenommen, die im wesentlichen rechtwinklig zum Rand 11 der eingelegten Scheibe 3 stehen und eine im wesentlichen rechtwinklig zu den Scheibenkanten 11 vorgegebene Bewegungsbahn der Schubglieder 9 zwangsweise bedingen. Zur Bewegung der Schubglieder 9 ist zumindest ein Antriebsorgan 12 vorgesehen, das über ein umlaufendes Gestänge 13 mehrere oder alle Schubglieder 9 betätigt. Die Bewegung der Schubglieder 9 ist daher zwangssynchronisiert.

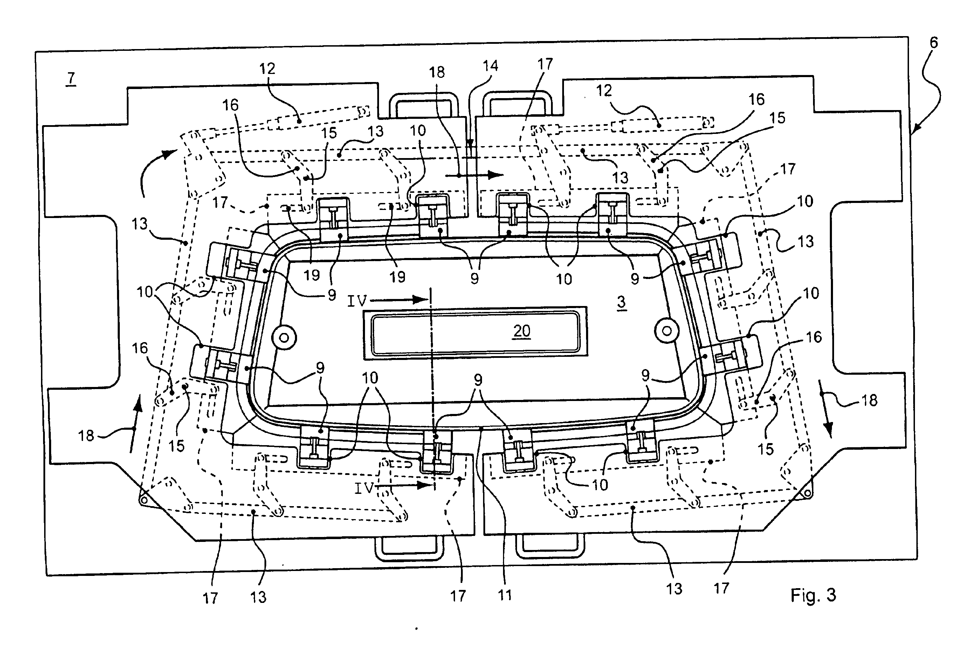

In Fig. 3 ist ein an einer Kopplungsstelle 14 verbundenes Gestänge 13 eingezeichnet, das über zwei synchronisierte Antriebsorgane 12 betätigbar ist. An Stelle der zwei gezeigten Antriebsorgane 12 würde auch eines ausreichen, sofern die Kopplung 14 einen entsprechenden Schluß der dadurch verbundenen Gestängeteile 13 ermöglicht.

Das umlaufende Gestänge 13 ist über kraftvermittelnde und jeweils um feste Drehpunkte 15 schwenkbare Hebel 16 mit die Schubglieder 9 bewegenden Rahmenkörpern 17 verbunden. Im Ausführungsbeispiel sind jeweils zwei Schubglieder 9 in einem Rahmenkörper 17 aufgenommen. Die Rahmenkörper 17 sind bei einer Zugbewegung des Gestänges 13 in Richtung des Pfeils 18 durch Einziehen der Kolbenstangen der Antriebsorgane 12 über die Hebel 16 und deren Verschwenken um die Drehachsen 15 beweglich. Dadurch, daß die Schubglieder 9 einerseits in den Rahmenkörpern 17 aufgenommen und andererseits in den Kulissen 10 zwangsgeführt sind, ist lediglich eine Bewegung der Schubglieder 9 senkrecht zur Erstreckung dieser Kulissen 10 möglich ist. Die Umlenkung der Schwenkbewegung der Hebel 16 in eine reine Transversalbewegung der Schubglieder 9 wird dadurch vermittelt, daß die Hebel 16 an den Rahmenkörpern 17 in Langlöchern 19 angreifen, wodurch eine Bewegungskomponente des Schwenkens der Hebel 16 abgefangen wird und lediglich die senkrecht zur Scheibe 3 wirkende Hubbewegung der Schubglieder 9 verbleibt.

Durch das umlaufende Gestänge 13 ist sichergestellt, daß alle Schubglieder 9 in gleicher Weise so weit bewegt werden, bis bei eingelegter Scheibe 3 alle Schubglieder mit gleicher Kraft Druck auf die Scheibenkante 11 ausüben, die Scheibe dabei ihre fixierte Endstellung erreicht, in der sie über eine Unterdruckpumpe 20 unterhalb der Ebene der Scheibenerstreckung halterbar ist.

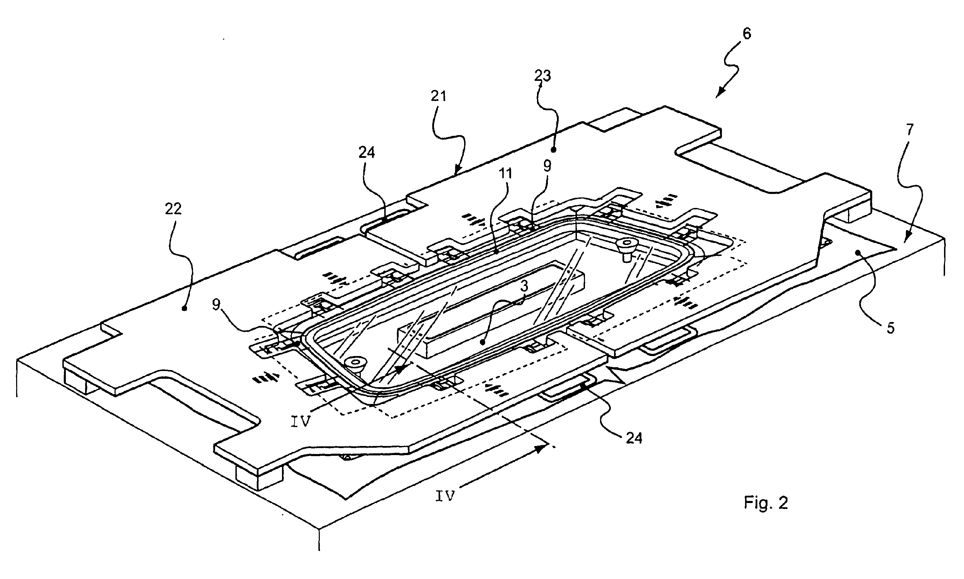

Die Fixierungseinrichtung 8 ist insgesamt an einer Baugruppe 21 angeordnet, die zwischen einer Öffnungsstellung (Fig. 1) und einer Schließstellung (Fig. 2) beweglich ist. Die Baugruppe 21 umfaßt hierzu zwei seitlich angeschlagene und um horizontale Achsen aufschwenkbare Tragrahmen 22,23, die in Öffnungsstellung (Fig. 1) im wesentlichen vertikal stehen und daher den Zugang zur Auflage 7 unbeeinträchtigt lassen.

Die Tragrahmen 22,23 können motorisch oder handbetätigt über Griffe 24 in die Schließstellung nach Fig. 2 verlagert werden.

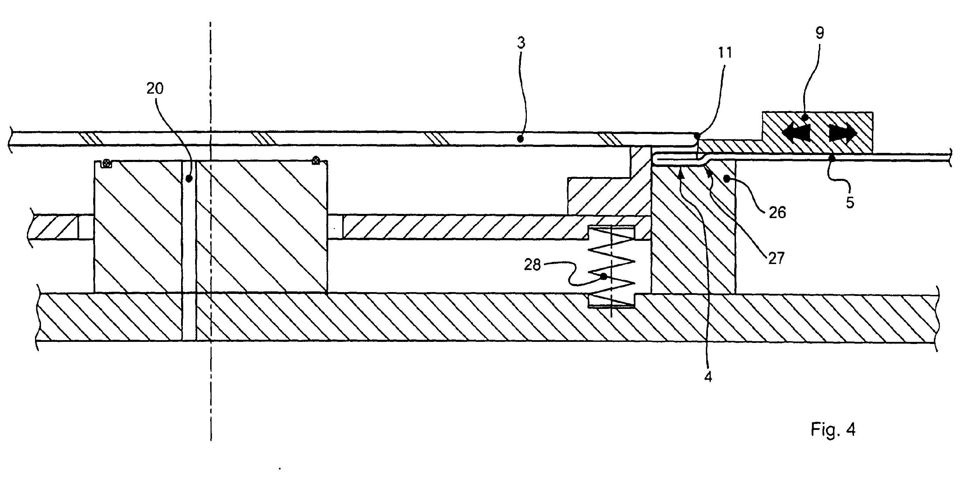

Wie an Fig. 4 sichtbar ist, ist zur Verbindung des Verdeckteils 5 mit der Scheibe 3 der mit dem Scheibenrand überlappende Rahmenbereich 4 des Verdeckteils 5 in einer unteren Elektrode 26 derart aufgenommen, daß durch die abgestufte Formgestaltung der Elektrode 26 einer Umbugvernähung oder -verklebung des Rahmenbereichs 4 Rechnung getragen wird. Der umgelegte Teil des Rahmenbereichs 4 ist daher derart gelagert, daß sowohl im umgelegten Bereich als auch im daran anschließenden einlagigen Bereich des Verdeckteils 5 die Oberfläche auf gleichen Niveau ist, so daß die Schubglieder 9 sich ohne eine Abstufung in ihrer Bewegungsbahn verlagern können und die Scheibe 3 in ihrem Randbereich 11 von einem planeben untergreifenden Teil des Verdecks untergriffen ist.

Die Abstufung 27 ist parallel zur Scheibenkante 11 ausgerichtet und umläuft die Scheibe 3 im gesamten Rahmenbereich 4.

Zur Verschweißung, Verklebung, für ein reaktives Kleben, ein Schweißkleben oder eine ähnliche Verbindung zwischen der Scheibe 3 und dem Rahmenbereich 4 wird zunächst der Teil 5, der den Rahmenbereich 4 umfaßt, in die Vorrichtung 6 eingelegt, wobei die Baugruppe 21 in Offenstellung befindlich ist und somit das Einlegen nicht behindert. Anschließend wird die Baugruppe 21 geschlossen, und die Scheibe, hier Heckscheibe, 3 wird aufgelegt. Über das oder die Antriebsogran(e) 12 wird auf die Gestängeteile eine Kraft 13 derart ausgeübt, daß die umlaufend um die eingelegte Heckscheibe 3 angeordneten Schubglieder 9 zentral aufeinander zubewegt werden und hierbei in eine stets gleiche Endstellung gelangen, in der die Scheibe 3 aus beliebiger Richtung in die fixierte Endstellung verschoben worden ist. Die Bewegungsbahn der Schubglieder 9 erstreckt sich dabei parallel zur Ausdehnung der Scheibenebene.

In dieser Stellung (Fig. 4) wird eine Unterdruckansaugung 20 für die Scheibe 3 betätigt, so daß diese in nunmehr fixierter Stellung auf den Rahmenbereich 4 des Verdeckteils 5 aufgelegt wird. Dabei wird Arbeit gegen die Kraft einer Unterstützungsfeder 28 geleistet.

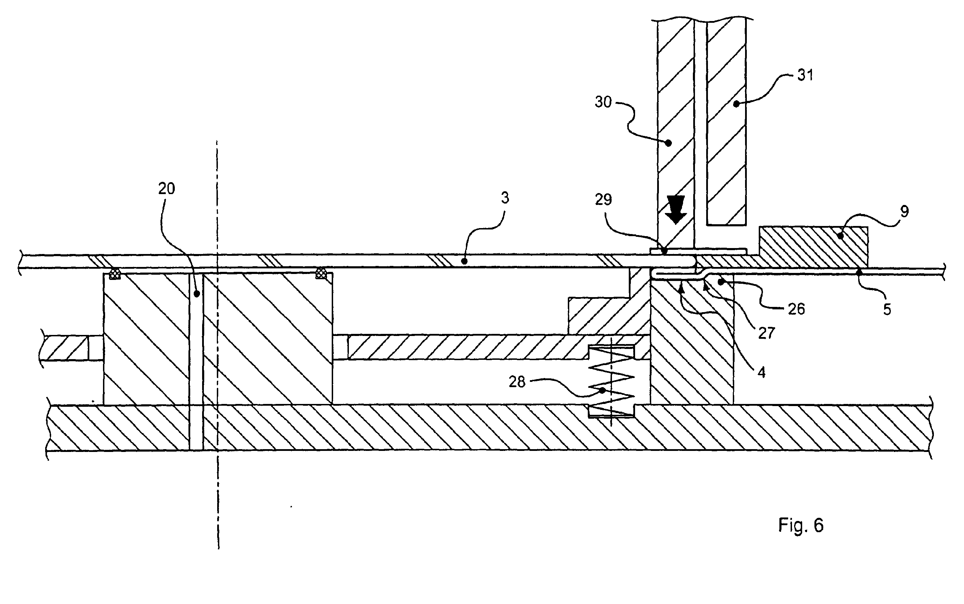

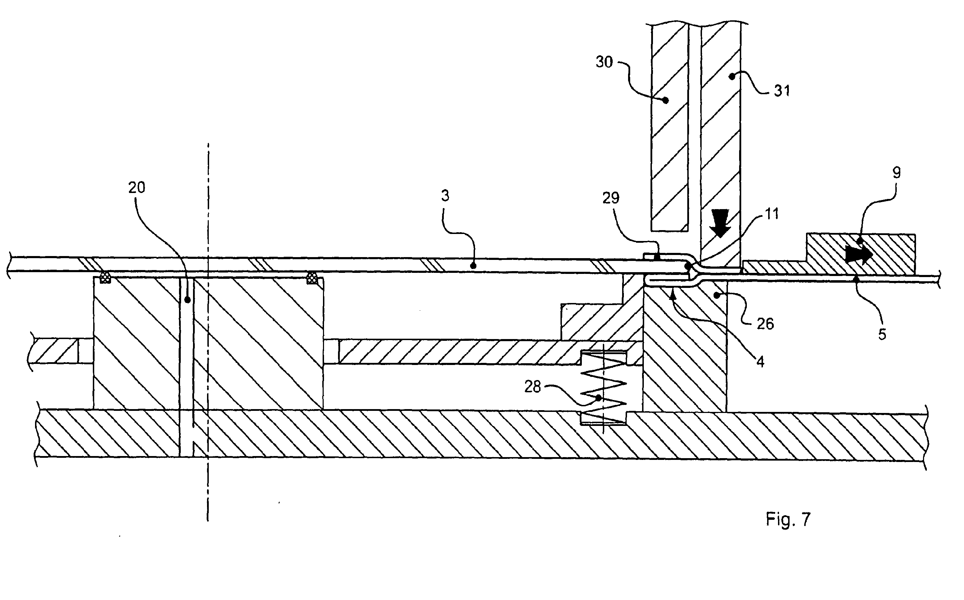

Das eigentliche Verbinden durch insbesondere Schweißkleben oder andere thermische Verbindungsverfahren ist zweistufig und in den Figuren 6 und 7 dargestellt: Zunächst wird auf die so fixierte und abgesenkte Scheibe 3 ein innerer Abdeckstreifen 29 aufgelegt, der den Randbereich der Scheibe 3 in etwa gleicher Breite wie der Rahmenbereich 4 einfaßt. Durch Absenken einer ebenfalls über diesen Breitenbereich erstreckten oberen Elektrode 30 über einen definierten Zeitraum wird Wärmeeintrag in die Verbindungszone bewirkt, wodurch die Schweiß- oder Klebeverbindung, beispielsweise auch reaktive Klebeverbindung, bewirkt wird. Danach kann die Fixierung der Scheibe 3 mittels der Schubglieder 9 gelöst werden, diese verfahren daher, wie in Fig. 7 sichtbar ist, nach außen und geben so einen Bereich frei, in dem der Abdeckstreifen 29 frei oberhalb der äußeren Lage des den Rahmenbereich 4 umfassenden Teils 5 des Verdecks 2 liegt. Durch Absenken der zweiten Elektrode 31 kann dann (Fig. 7) ein Wärmeeintrag in einen außerhalb der Scheibenkante 11 liegenden Bereich vorgenommen werden, in dem der Abdeckstreifen 29 und die äußere Lage des Teils 5 aufeinandergepreßt und miteinander verbunden werden.

Damit ist die Scheibe auf der Innenseite von dem Abdeckstreifen 29 und auf der Außenseite von dem umbuggelegten äußeren Teil 5 beidseitig eingefaßt, was Optik und mechanische Stabilität verbessert. Durch die Abstufung 27 kann die Erstreckung des umbuggelegten Bereichs des Teils 5 sehr klein gehalten werden, so daß, anders als bei bisherigen Vorrichtungen, nicht ein mehrere Zentimeter großer Überlappungsbereich geschaffen werden muß.

## Patentansprüche

1. Vorrichtung (6) zur Herstellung eines Cabriolet-Verdecks (2), das einen Rahmenbereich (4) zum zumindest teilweisen Umgreifen einer Scheibe (3), insbesondere einer Heckscheibe, umfaßt, wobei in der Vorrichtung (6) ein den Rahmenbereich (4) umfassender Teil (5) des Verdecks (2) halterbar und mit der Scheibe (3) verbindbar ist und wobei die Vorrichtung (6) eine Fixierungseinrichtung (8) zur paßgenauen Halterung der Scheibe (3) bezüglich des Rahmenbereichs (4) umfaßt, **dadurch gekennzeichnet, daß** die Fixierungseinrichtung (8) Schubglieder (9) umfaßt, die in der Ebene der eingelegten Scheibe (3) beweglich sind und über unterschiedliche Scheibenkanten (11) auf die Scheibe (3) einwirken können.

2. Vorrichtung nach Anspruch 1, **dadurch gekennzeichnet, daß** die Schubglieder (9) miteinander gekoppelt verfahrbar sind und zur Fixierung der Scheibe (3) aus einer die Zuführung der Scheibe (3) ermöglichenden Öffnungsstellung in eine die zugeführte Scheibe (3) allseits einfassende Schließstellung verfahrbar sind.

3. Vorrichtung nach einem der Ansprüche 1 oder 2, **dadurch gekennzeichnet, daß** die Schubglieder (9) in im wesentlichen rechtwinklig zum Scheibenrand stehenden Führungskulissen (10) aufgenommen sind.

4. Vorrichtung nach einem der Ansprüche 1 bis 3, **dadurch gekennzeichnet, daß** die Schubglieder (9) an einer in Öffnungsstellung das Einlegen des Verdeckteils (5), das den Rahmenbereich (4) umfaßt, ermöglichenden Baugruppe (21) gehalten sind, die in Schließstellung das eingelegte Verdeckteil (5) im wesentlichen übergreift.

5. Vorrichtung nach Anspruch 4, **dadurch gekennzeichnet, daß** die Baugruppe (21) zwei schwenkbare Tragrahmen (22;23) für Schubglieder (9) umfaßt.

6. Vorrichtung nach Anspruch 5, **dadurch gekennzeichnet, daß** die Tragrahmen (22;23) für die Schubglieder (9) miteinander in Schließstellung koppelbar (14) sind und sämtliche Schubglieder (9) mittels eines Antriebsorgans (12) beweglich sind.

## Claims

1. A device (6) for manufacturing a cabriolet folding top (2) which includes a frame area (4) for at least partially encompassing a window (3), particularly a rear window, whereby, in the device (6), a part (5) of the folding top (2) which includes the frame area (4) can be fastened and connected to the window (3) and whereby the device (6) includes a fixing device (8) for snugly fastening the window (3) with respect to the frame area (4), **characterised in that** the fixing device (8) includes push elements (9) which are movable in the plane of the inserted window (3) and can act upon the window (3) via different window edges (11).

2. The device according to Claim 1, **characterised in that** the push elements (9) can be shifted when coupled to each other and can be shifted from an opening position, which makes possible the introduction of the window (3), into a closed position, which surrounds the introduced window (3) on all sides, in order to fix the window (3).

3. The device according to one of Claims 1 or 2, **characterised in that** the push elements (9) are accommodated in guiding connecting links (10) which are substantially perpendicular to the window border.

4. The device according to one of Claims 1 to 3, **characterised in that** the push elements (9) are fastened at an assembly (21) which, in the opening position, enables the insertion of the folding top part (5) including the frame area (4) and which, in the closed position, substantially overlaps the inserted folding top part (5).

5. The device according to Claim 4, **characterised in that** the assembly (21) includes two pivotable support frames (22; 23) for push elements (9).

6. The device according to Claim 5, **characterised in that** the support frames (22; 23) for the push elements (9) can be coupled together (14) in the closed position and all push elements (9) are movable by means of a drive mechanism (12).

## Revendications

1. Dispositif (6) pour la fabrication d'une capote pour cabriolet (2), lequel comprend une zone formant cadre (4) destinée à englober au moins partiellement une vitre (3), en particulier une lunette arrière, grâce à quoi, dans le dispositif (6), une partie (5) de la capote (2) comprenant la zone formant cadre (4) peut être assujettie et peut être raccordée avec la vitre (3), et grâce à quoi le dispositif (6) comprend un mécanisme de fixation (8) pour un assujettissement ajusté de la vitre (3) relativement à la zone formant cadre (4), **caractérisé en ce que** le mécanisme de fixation (8) comprend des éléments de poussée (9), lesquels sont mobiles au niveau de la vitre insérée (3) et peuvent agir sur la vitre (3) par l'intermédiaire de différents bords de vitre (11).

2. Dispositif selon la revendication 1, **caractérisé en ce que** les éléments de poussée (9) peuvent être déplacés accouplés les uns aux autres et peuvent être déplacés pour la fixation de la vitre (3) d'une position d'ouverture permettant l'introduction de la vitre (3) à une position de fermeture qui entoure de partout la vitre introduite (3).

3. Dispositif selon l'une des revendications 1 et 2, **caractérisé en ce que** les éléments de poussée (9) sont logés dans des coulisses de guidage (10) verticales sensiblement perpendiculaires à la bordure de vitre.

4. Dispositif selon l'une des revendications 1 à 3, **caractérisé en ce que** les éléments de poussée (9) sont assujettis à un assemblage (21) permettant, en position d'ouverture, l'insertion de la partie formant capote (5) qui comprend la zone formant cadre (4), lequel chevauche essentiellement la partie formant capote (5) insérée en position de fermeture.

5. Dispositif selon la revendication 4, **caractérisé en ce que** l'assemblage (21) comprend deux cadres porteurs pouvant pivoter (22 ; 23) pour les éléments de poussée (9).

6. Dispositif selon la revendication 5, **caractérisé en ce que** les cadres porteurs (22 ; 23) pour les éléments de poussée (9) peuvent être accouplés l'un à l'autre en position de fermeture (14) et tous les éléments de poussée (9) sont mobiles au moyen d'un organe d'entraînement (12).
